# EUROPEAN PATENT SPECIFICATION

(11) **EP 2 438 201 B1**
(45) Date of publication and mention of the grant of the patent: **18.02.2015**
(21) Application number: 10723108.6
(22) Date of filing: 03.06.2010
(51) Int. Cl.: C21B 7/20, F16H 37/08, F27B 1/20, F27D 3/10

(54) **DEVICE FOR DISTRIBUTING CHARGE MATERIAL IN A SHAFT FURNACE**
VORRICHTUNG ZUR LADEMATERIALVERTEILUNG BEI EINEM SCHACHTOFEN
DISPOSITIF POUR DISTRIBUER UN MATÉRIAU DE CHARGE DANS UN FOUR À CUVE

(30) Priority: 05.06.2009 LU 91577
(43) Date of publication of application: 11.04.2012
(73) Proprietor: Paul Wurth S.A., 1122 Luxembourg (LU)
(72) Inventor: THILLEN, Guy, L-9234 Diekirch (LU); LONARDI, Emile, L-4945 Bascharage (LU); HAUSEMER, Lionel, L-5231 Sandweiler (LU); THIX, Christian Benoît, L-1537 Luxembourg (LU)
(74) Representative: Office Freylinger
(86) International application number: PCT/EP2010/057805
(87) International publication number: WO 2010/139776

(56) References cited:
- WO-A-00/63587
- CN-A- 101 476 005
- LU-A1- 59 207
- LU-A1- 65 312
- US-A1- 2003 180 129

## Description

### Technical field

The present invention generally relates to a charging installation for a shaft furnace and in particular to a device for distributing charge material in the furnace. More specifically, the invention relates to the type of device that is equipped with a chute for circumferential and radial distribution of the charge material.

### Background Art

A device of this type is known from U.S. patent 3,693,812. The device according to US 3,693,812 has a suspension rotor and a chute adjustment rotor that are supported in a main housing so as to be rotatable about a substantially vertical rotation axis. The chute is suspended to the suspension rotor so that it rotates with the latter for circumferential distribution of charge material. Furthermore, in the device according to US 3,693,812, the chute is suspended to be pivotally adjustable about a substantially horizontal axis for radial distribution of charge material. The suspension rotor and the adjustment rotor are driven by a differential drive unit that is equipped with a main rotation drive, namely an electric motor, and an adjustment drive, namely an electric motor. The latter allows creating differential rotation between the suspension rotor and the adjustment rotor. In the device according to US 3,693,812, a pivoting mechanism is provided for adjustment of the chute. This mechanism, which is connected to the chute and actuated by the adjustment rotor, transforms a variation in angular displacement between the suspension rotor and the adjustment rotor due to differential rotation into a variation of the pivotal position i.e. the tilt angle of the chute.

The device for distributing charge material according to US 3,693,812 is equipped with a compact drive unit for driving the two rotors. This unit is enclosed in a casing arranged on the main housing that supports the rotors and the chute. The casing has a primary input shaft; a secondary input shaft; a first output shaft, hereinafter called rotation shaft; and a second output shaft, hereinafter called adjustment shaft. The primary input shaft is driven by the main rotation drive. Inside the casing, a reduction mechanism connects the primary input shaft to the rotation shaft, which extends vertically inside the main housing where it is provided with a gearwheel that meshes with a gear ring of the suspension rotor. The adjustment shaft also extends vertically into the main housing where it is provided with a gearwheel that meshes with a gear ring of the adjustment rotor. Inside the casing of the drive unit, the rotation shaft and the adjustment shaft are interconnected by means of an epicyclic differential mechanism, i.e. a sun-and-planet gear train. The latter mainly comprises a horizontal annulus (ring gear) that has external teeth meshing with a gearwheel on the rotation shaft; a sun gear that is connected to the secondary input shaft; at least two planet gears that mesh with internal teeth of the annulus and with the sun gear. This sun-and-planet gear train is dimensioned so that the rotation shaft and the adjustment shaft have the same rotational speed imparted by the main rotation drive when the secondary input shaft is stationary, i.e. when the adjustment drive is at stop. The adjustment drive is a reversible drive and connected to the secondary input shaft. By virtue of the differential mechanism, the adjustment drive allows driving the adjustment shaft at a faster and at a lower rotational speed than the rotation shaft to thereby produce a relative i.e. differential rotation between the suspension rotor and the adjustment rotor. The pivoting mechanism transforms such differential rotation into pivoting motion of the chute. A similar compact drive unit is disclosed in US patent 3,814,403 which mainly differs in that its two output shafts are coaxially arranged, with the adjustment shaft passing coaxially through the rotation shaft and both extending into the main housing through the same opening.

As will be appreciated, the above-described compact drive unit is a key component of the device for distributing charge material. Since it is custom made, it represents a significant part of the total cost of the device. Moreover, in order to ensure continuous operation of the furnace when the drive unit requires servicing or major repair, a complete replacement unit is typically kept in stock by the furnace operator.
US2003/180129 discloses another configuration of a rotary, tilting chute system.

### Technical problem

It is a first object of the present invention to provide a device for distributing charge material in a shaft furnace the maintenance of which is simplified and less cost-intensive. This object is achieved by a device according to claim 1.

### General Description of the Invention

The device for distributing charge material according to the invention comprises in a manner known per se: a main housing and a distribution chute for distributing charge material. A suspension rotor is mounted in the main housing and rotatable about a substantially vertical rotation axis, which typically coincides with the furnace axis. The suspension rotor is provided with a first gear ring for imparting rotation to this rotor. An adjustment rotor is mounted in the housing and rotatable about a substantially vertical rotation axis, which typically coincides with the rotation axis or the chute suspension rotor. For being driven, the adjustment rotor has a second gear ring. The distribution chute is suspended to the suspension rotor so as to rotate therewith for circumferential distribution of charge material. Furthermore, for radial distribution of charge material, the chute is adjustable in orientation relative to the suspension rotor, in particular pivotally adjustable about a substantially horizontal pivoting axis, by means of the adjustment rotor. A differential mechanism, in particular a differential gear, interconnects both rotors in a manner that allows differential rotation of the adjustment rotor relative to the suspension rotor. A main rotation drive, typically an electric motor, is connected to the suspension rotor for imparting rotation thereto. The latter drive is also connected, by way of the differential, to the adjustment rotor for imparting rotation to the latter. Furthermore, the device includes an adjustment drive, in particular an electric motor, that is connected through the differential to the adjustment rotor for imparting a differential rotation to the adjustment rotor, i.e. a variation in angular position of the adjustment rotor relative to the suspension rotor. This differential is configured to transmit to the adjustment rotor the same speed of rotation that the main rotation drive imparts directly to the suspension rotor unless the adjustment drive is operated to impart differential rotation to the adjustment rotor. In other words, the differential is configured to superimpose torque imparted by both drives respectively onto the adjustment rotor to allow the latter, as desired, to rotate in both senses or to keep its angular position relative the suspension rotor.

According to the presently claimed invention, and in order to achieve its first object, the distribution device comprises three distinct casings arranged on the main housing. More specifically, the device comprises:
- a first casing arranged on the main housing and enclosing an angular transmission, e.g. a bevel gear pair, between a substantially vertical output shaft, which protrudes from the first casing into the main housing and is operationally connected to drive a gearwheel that meshes with the first gear ring of the suspension rotor to impart rotation to the latter, and a connecting shaft, which protrudes from the first casing at an angle, in particular perpendicularly, with respect to the output shaft;
- a second casing arranged on the main housing and enclosing an angular transmission, e.g. a bevel gear pair, between a substantially vertical output shaft, which protrudes from the second casing into the main housing and is operationally connected to drive a gearwheel that meshes with the second gear ring of the adjustment rotor to impart rotation to the latter, and a connecting shaft, which protrudes from the second casing at an angle, in particular perpendicularly, with respect to the output shaft;
- a separate third casing that is spaced apart from the first and second casings, e.g. on the main housing or on a separate support structure, and encloses the differential, the differential being connected to a first shaft, which protrudes from the third casing and is coupled to the connecting shaft of the first casing, and to a second shaft, which protrudes from the third casing and is coupled to the connecting shaft of the second casing.

As will be appreciated, the three separate casings with their respective integrated mechanisms can be designed as "standardized" units, manufactured mainly with readily available mechanical components. Moreover, as first and second casings, commercially available components that provide enclosed angular transmissions may be used for transmitting driving torque to the first and second gear rings respectively. Thereby, the cost of the drive unit can be reduced. Moreover, each of the separate casings can be easily removed and individually replaced, whereby maintenance is facilitated. In addition, in case of a failure of the differential in the third casing, the latter can be easily removed for servicing, and the connecting shafts of the first and second casings connected by a direct (non-differential) torque transmission, e.g. in the form of a rigid shaft. Accordingly, the device can temporarily operate with a fixed position of the chute relative to the suspension rotor until the differential is repaired and reinstalled.

In a preferred embodiment, the adjustment drive is mounted to the third casing and preferably connected to the differential by means of a reduction gear, which is beneficially arranged inside the third casing.

The main rotation drive may be mounted either to the third casing, inside of which its is preferably connected to the first shaft of the differential by means of a gear train; or to the first casing, inside of which it is preferably connected to the output shaft of the first casing by means of a gear train. The former arrangement allows designing both the first and second casings as identical units, thereby further reducing cost and facilitating maintenance, whereas the latter embodiment facilitates continued operation in case the third casing is removed for servicing or repair of the differential mechanism.

Preferably, each of the first and second casings comprises a base plate with a sealing bushing through which its output shaft protrudes. In this embodiment, the main housing beneficially comprises, for each of the first and second casings, a respective opening for the passage of the gearwheel on the respective output shaft. This embodiment enables the need to manually remove and reinstall the driving gearwheels in case of replacement of either of the casings.

In order to increase positioning flexibility and tolerance regarding minor misplacement or improper orientation, wherein the first shaft of the differential is preferably coupled to the connecting shaft of the first casing by means of a homokinetic universal joint arrangement. In addition or alternatively, the second shaft can be coupled to the connecting shaft of the second casing by means of a homokinetic universal joint arrangement. Preferably, the homokinetic universal joint arrangement consists of a double Cardan shaft with length compensation, e.g. through a length-extensible intermediate shaft. In order to further increase tolerance in orientation between the shafts, each of the two Cardan joints of the Cardan shaft is preferably a centered double Cardan joint.

In a preferred configuration, which minimizes the intervention time for continued operation in case of removal of the third casing, the main rotation drive is mounted on the first casing and the first casing and the second casing are arranged on the main housing so that their connecting shafts are aligned. In this configuration, the third casing can simply be replaced by a rigid torque transmission link.

Preferably, the differential gear is an epicyclic sun-and-planet gear that comprises an annulus, a sun gear and a planet gear carrier carrying at least two planet gears that mesh with the annulus and the sun gear. While other configurations are not excluded, in a preferred configuration, the sun gear is fixed to the first shaft of the differential, the planet gear carrier is fixed to the second shaft of the differential, and the annulus is connected to the adjustment drive and rotatably supported, e.g. by the first shaft or by the second shaft.

In a typical configuration, the distribution device includes a pivoting device that connects the distribution chute to the adjustment rotor. Such pivoting device is designed to transform a differential rotation of the adjustment rotor relative to the suspension rotor into a variation of the angle of inclination of the chute.

As will be understood, the device according to the invention is designed particularly for use in a shaft furnace charging installation. Accordingly, a main industrial application is e.g. in a metallurgical blast furnace for pig iron production.

### Brief Description of the Drawings

Further details and advantages of the present invention will be apparent from the following detailed description of several not limiting embodiments with reference to the attached drawings, wherein:
FIG.1 is a plan view of a device for distributing charge material into a shaft furnace according to a first embodiment of the invention;
FIG.2 is a vertical cross-sectional view of the device of FIG.1, composed of an upper part of the figure taken along section line A-A of FIG.1 and a lower part taken along section line B-B of FIG.1;
FIG.3 is a view in side elevation, illustrating a differential mechanism, more specifically a planetary gear for use in the device of FIG.1;
FIG.4 is a plan view of a device for distributing charge material into a shaft furnace according to a second embodiment of the invention;
FIG.5 is a vertical cross-sectional view of the device of FIG.4, composed of an upper part of the figure taken along section line C-C of FIG.4 and a lower part taken along section line D-D of FIG.4;
FIG.6 is a partial vertical cross-sectional similar to FIG.5, illustrating a first alternative embodiment of a differential gear;
FIG.7 is a partial vertical cross-sectional similar to FIG.5, illustrating a second alternative embodiment of a differential gear;
FIG.8 is a partial vertical cross-sectional similar to FIG.5, illustrating a third alternative embodiment of a differential gear;
FIG.9 is a partial vertical cross-sectional similar to FIG.5, illustrating a fourth alternative embodiment of a differential gear;
FIG.10 is a plan view of a device for distributing charge material into a shaft furnace according to a third embodiment of the invention;
FIG.11 is a vertical cross-sectional view of an upper part of the device of FIG.10 taken along section line E-E of FIG.10;
FIG.12 is a plan view of a device for distributing charge material into a shaft furnace according to a fourth embodiment of the invention;
FIG.13 is a side elevation view of the device of FIG.12.

In these drawings, identical reference signs identify identical or similar parts, while reference signs with incremented hundreds digit identify functionally similar parts in a structurally different embodiment.

### Detailed Description with respect to the Drawings

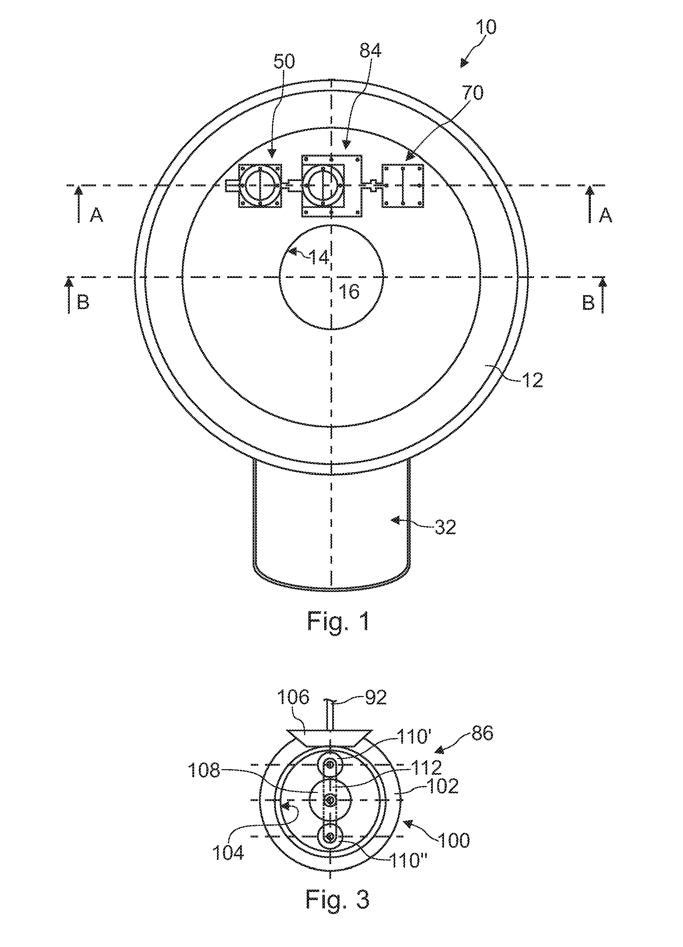

FIGS.1-2 illustrate a first embodiment of a device 10 for distributing bulk charge material ("burden") into a shaft furnace, especially onto the stockline of a blast furnace. The device 10 is designed to be part of a charging installation, which is not shown in its entirety. It comprises a main housing 12 to be arranged on the furnace throat and which includes a fixed feeding spout 14 that defines a vertical feeding channel 16. A suspension rotor 18 is suspended inside the main housing 12 by means of a first large-diameter annular roller bearing 20 to be rotatable about a substantially vertical rotation axis. The suspension rotor 18 comprises a generally cylindrical body provided at its lower in with a disk-shaped horizontal protection flange 24, which forms a screen between the interior of the main housing 12 and the interior of the furnace. A second rotor, hereinafter called adjustment rotor 26, surrounds the suspension rotor 18 and is suspended inside the main housing 12 by means of a second large-diameter annular roller bearing 28, which is arranged so that the axis of rotation of the adjustment rotor 26 is substantially coaxial to the axis of rotation of the suspension rotor 18.

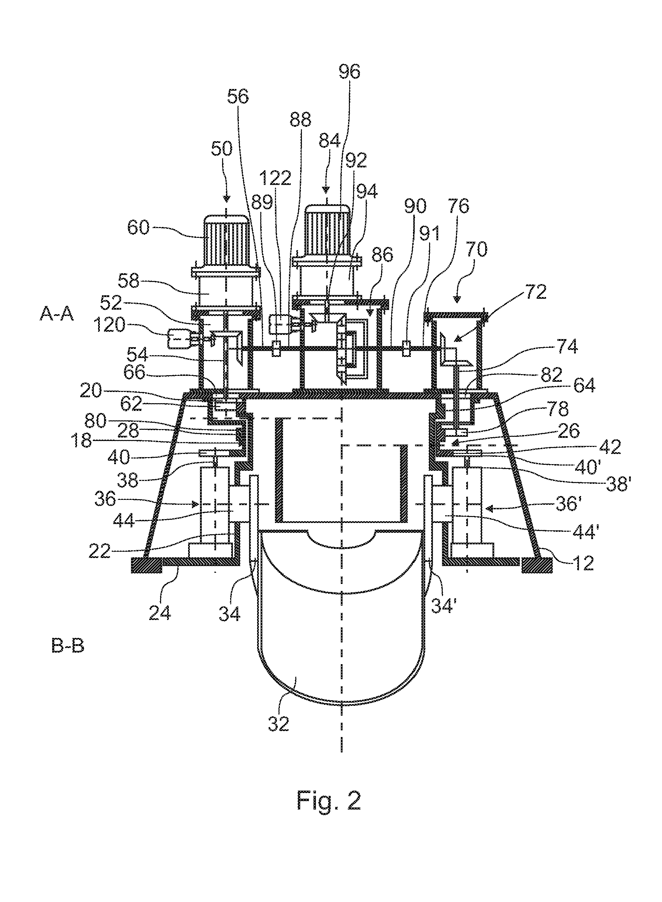

Reference sign 32 identifies a distribution chute for bulk material fed through the feeding channel 16. The chute 32 has two lateral suspension arms 34, 34' by means of which it is suspended to the suspension rotor 18. A pivoting device that is actuated by the adjustment rotor 26 allows adjusting the orientation of the chute 32 relative to the suspension rotor 18, more specifically the pivotal position or tilting angle of the chute about an axis that is substantially horizontal. To this effect, the pivoting device connects the distribution chute 32 to the adjustment rotor 26 to transform a differential rotation of the adjustment rotor 26 into a variation of the pivotal position of the chute 32. In the illustrated device 10, the pivoting device comprises, for each suspension arm 34, 34' of the chute 32, a pivoting mechanism 36, 36', which are carried at diametrically opposite locations on and by the suspension rotor 18. Each of the pivoting mechanisms 36, 36' has a respective vertical input shaft 38, 38', an internal gear system (not shown) and a horizontal suspension trunnion 44, 44'. The input shafts 38, 38' are parallel to the rotation axes of both rotors 18, 26 and connected to a respective gearwheel 40, 40' that meshes with a lower gear ring 42 of the adjustment rotor 26. Each internal gear system (not shown) transforms rotation of the respective input shaft 38, 38' into rotation of the respective suspension trunnion 44, 44'. As will be noted, both pivoting mechanisms 36, 36' are symmetrical with respect to a center plane of the chute 32, that is to say, rotation of the input shafts 38, 38' by the lower gear ring 42 of the adjustment rotor 26 results in a rotation in opposite senses (seen from the median plane) of both suspension trunnions 44, 44' to pivot the chute 32. As seen in FIG.2, the lateral suspension arms 34, 34' are mounted to the trunnions 44, 44' so that they define a substantially horizontal pivoting axis for the chute 32.

As will be understood, other suitable adjustment mechanisms may be used for adjusting the chute position relative to the suspension rotor 18. For instance, U.S. patent no. 4,941,792 discloses a pivoting mechanism with a forked pivoting lever connecting two suspension trunnions to the adjustment rotor, respectively an annular toothed segment that cooperates with an toothed sector fixed to either of the two chute trunnions. U.S. patent no. 5,002,806 on the other hand proposes connecting the adjustment rotor to a crank on one of the chute trunnions by means of a rod linkage with spherical joints. Whereas the above adjustment mechanisms are designed to transform a differential rotation of the adjustment rotor relative to the suspension rotor into a variation of the tilt angle of the chute, other possibilities of adjustment are not excluded. In a further alternative embodiment for instance, the chute is not a pivotable chute, but a sort of two-piece chute having an upper part, which is formed by and rotates in unison with the suspension rotor about the furnace central axis, and a lower part, which rotates about a second vertical rotation axis that is laterally offset from the central axis. Examples of such distribution devices and corresponding adjustment mechanisms for actuating the lower part of the two-part chute are disclosed in Japanese patent application Nos. JP 63 096205 or JP 02 022409 or in Soviet Union Inventor's Certificate SU 1669988.

In FIGS.1-2, reference sign 50 identifies a first casing that is arranged on the main housing 12. The first casing 50 encases an angular transmission 52 of the bevel gear type. The angular transmission 52 connects a substantially vertical output shaft 54 that protrudes from the casing 50 down into the main housing 12 and a substantially horizontal connecting shaft 56 that protrudes from the first casing 50 at a right angle with respect to the output shaft 54. In the embodiment of FIG.2, the upper end of the output shaft 54 is connected, through a gear train 58, e.g. a reduction gear, to a main rotation drive 60, preferably an electric motor while other drives, such as hydraulic or pneumatic drives are not excluded. The lower end of the output shaft 54 is provided with a gearwheel 62 that meshes with a first gear ring 64 on the suspension rotor 18. Accordingly, the output shaft 54 acts as rotation drive shaft to transmit torque from the main rotation drive 60 to the suspension rotor 18. As will be noted, the output shaft 54 passes through a sealing bushing, e.g. a stuffing box, in the lower base plate of the casing 50, in order to isolate the interior of the casing 50 from the interior of the main housing 12. Furthermore, the base plate of the casing 50 is removably mounted onto the main housing 12 using a suitable seal to seal an opening 66 in the top plate of the main housing 12. The opening 66 is dimensioned to permit passage of the gearwheel 62.

In FIGS.1-2, reference sign 70 identifies a second casing that is arranged on the main housing 12. This casing 70 also encloses an angular transmission 72 with a bevel gear pair. The angular transmission 72 connects a substantially vertical output shaft 74 to a substantially horizontal connecting shaft 76. The lower end of the output shaft 74 carries a gearwheel 78 that meshes with a second gear ring 80 that is fixed to an upper region of the adjustment rotor 26, above the lower gear ring 42. The output shaft 74 protrudes into the main housing 12 through a sealing bushing in the lower base plate of the casing 70 whereas the connecting shaft 76 protrudes horizontally from the casing 70 through a suitable bearing. As will be noted, the base plate of the casing 70 is also removably mounted onto the main housing 12 using a suitable seal to seal an opening 82 in the top plate of the main housing 12. The opening 82 is again dimensioned to permit passage of the gearwheel 78.

In between the first casing 50 and the second casing 70, a third casing 84 is spaced apart on the main housing 12. The third casing 84 encloses a differential mechanism, in particular an epicyclic sun-and-planet gear 86. Three shafts are connected to the sun-and-planet gear mechanism 86 and emerge from the third casing 84. These are namely: (i) a substantially horizontal first shaft 88 that is coupled, by means of a coupling 89, to the connecting shaft 56 of the first casing 50; (ii) a substantially horizontal second shaft 90 that is coupled, by means of a coupling 91, to the connecting shaft 76 of the second casing 70; and (iii) a drive shaft 92 that is connected, through a reduction gear 94, to an adjustment drive 96, in particular an electric motor. Suitable couplings 89, 91 are torsionally rigid compensating couplings, preferably flexible couplings, for instance Oldham-couplings or positive-fit claw couplings, while any torque-transmitting, and generally misalignment- and positioning-error-tolerant compensating coupling may be used. Another preferred choice for providing either of the yielding couplings 89, 91 is a flexible disk coupling or a positive fit gear coupling, in particular a gear coupling of the type with curved external gear teeth engaging an internally toothed sleeve. More preferably each yielding coupling 89, 91 includes a sequence of two of the latter flexible disk or gear couplings so as to imitate a double Cardan shaft.

The sun-and-planet gear mechanism 86 of the embodiment of FIG.1-2 is shown in an enlarged side-elevation in FIG.3. It comprises an annulus 100 provided with a conical external bevel gearing 102 and a cylindrical epicyclic internal gearing 104. A conical bevel gear 106 is fixed to the drive shaft 92 and meshes the bevel gearing 102 of the annulus 100 to transmit driving torque from the adjustment drive 96 to the annulus 100. A sun gear 108 is fixed to and supported by the first shaft 88 to bear coaxially inside the annulus 100. Hence, the sun gear 108 is coupled to the connecting shaft 56 of the first casing 50. Two epicyclic planet gears 110' and 110" mesh with the internal gearing 104 of the annulus 100 and, simultaneously, with a cylindrical epicyclic external gearing of the sun gear 108. The planet gears 110' and 110" are rotatably supported on a planet gear carrier 112, which in turn is fixed to and supported by the second shaft 90 that is coupled to the connecting shaft 76 of the second casing 70. As seen in FIG.2, the annulus 100 is rotatably supported by the second shaft 90.

The differential sun-and-planet gear mechanism 86 is dimensioned so that the rotational speed N1 of the first shaft 88, imparted by the main rotation drive 60 via the angular transmission 52, is equal to the rotational speed N2 of the second shaft 90, whenever the third shaft connected to the differential 86, i.e. the drive shaft 92 does not rotate, i.e. when the latter is at standstill (N3 = 0). In other words, the differential 86 is configured to transmit to the adjustment rotor 26 the same speed of rotation that is imparted to the suspension rotor 18 by the main rotation drive 60, unless the adjustment drive 96 imparts torque to the drive shaft 92 and thereby differential rotation to the adjustment rotor 26 relative to the suspension rotor 18. Accordingly, when the adjustment drive 96 is operated to rotate the drive shaft 92 at a rotational speed N3 (≠ 0) in a first sense, the rotational speed N2 of the second shaft 90 will correspond to the addition of the rotational speed N1 of the first shaft 88 and the rotational speed N3 of the drive shaft 92 multiplied by an appropriate gear ratio (which depends on the design of the differential sun-and-planet gear mechanism 86). On the other hand, when the adjustment drive 96 rotates the drive shaft 92 at a rotational speed N3 (≠ 0) in the opposite sense, the rotational speed N2 of the second shaft 90 will correspond to the rotational speed N1 of the first shaft 88 reduced by (subtraction) the rotational speed N3 of the drive shaft 92 multiplied by the appropriate gear ratio. It follows that, by operating the adjustment drive 96 as desired, the differential sun-and-planet gear mechanism 86 allows increasing, reducing or eliminating an angular displacement between the suspension rotor 18 and the adjustment rotor 26. Accordingly, the differential 86 interconnects the suspension rotor 18 and the adjustment rotor 26 in a manner that allows differential rotation of the former relative to the latter. On the other hand, the differential 86 allows maintaining both rotors 18, 26 at the same speed of rotation without operation of the adjustment drive 96, i.e. when the latter is at rest. Any suitable adjustment mechanism as described above then transforms variations in angular displacement between the suspension rotor 18 and the adjustment rotor 26 into corresponding variation of the position of the chute 32, in particular the pivoting position / tilting angle in case of FIGS.1-2. As will be understood, the rotational speed of the adjustment drive 96 determines the adjusting, i.e. pivoting speed of the chute 32. When the chute 32 is to be maintained in position (relative to the suspension rotor 18), it suffices to stop the adjustment drive 96. Breaking of the adjustment drive can be achieved electrically. After stop (rest) of the adjustment drive 96, the latter may be blocked in rotation mechanically, e.g. by means of a self-blocking configuration of the reduction gear 94. In the above functional description, it is assumed that the gear ratio between the first gear ring 64 and the gearwheel 62 is identical to the gear ratio between the second gear ring 80 and the gearwheel 78. In case the latter gear ratios differ, the internal gear ratios of the differential sun-and-planet gear mechanism 86 are adapted accordingly to achieve synchronous rotation of the rotors 18, 26 by sole action of the main rotation drive 60 and to permit differential rotation there between by action of the auxiliary adjustment drive 96.

Turing back to FIG.2, reference sign 120 identifies a first rotary encoder that measures rotation of the output shaft 54 of the first casing 50, which - by applying the gear ratio between the gearwheel 62 and the first gear ring 64 - is equivalent to measuring rotation of the suspension rotor 18. A second rotary encoder 122 measures rotation of the drive shaft 92, which - by applying appropriate gear ratios for bevel gears 106, 102, for planetary gear 86, and for the gearwheel 78 and the second gear ring 80 - is equivalent to measuring rotation of the adjustment rotor 26. Using measurements made by the encoders 120, 122 and knowledge of the gear ratios, the actual (pivotal) position of the chute 32 can be determined accurately at any moment.

As will be appreciated, the three casings 50, 70, 84 form, with their integrated transmission mechanisms, units which may be standardized and manufactured using commercially available standard mechanical components. Thereby, constructional cost of the distribution device 10 can be significantly reduced. Moreover, each casing 50, 70, 84 may be removed, replaced and serviced individually. This obviously facilitates maintenance and repair operations. In particular, in case of a need of servicing or replacement of a sealing bushing at the level of either output shaft 54, 74, the relatively inexpensive first and second casings can be replaced separately, without removal of the differential 86. Furthermore, in case of a failure of the differential 86 that is enclosed separately in the third casing 84, the latter may be removed without interruption of operation of the distribution chute 32, due to the alignment of the connecting shafts 56, 76 of the first and second casings 50, 70 in the embodiment of FIG.1-3. Such alignment allows temporary installation of a rigid link to connect the compensating couplings 89, 91. With the main rotation drive 60 being still operational on the first casing 50, this measure enables continued operation with the chute 32 having a fixed pivotal position until the differential 86 is installed again after repair or servicing.

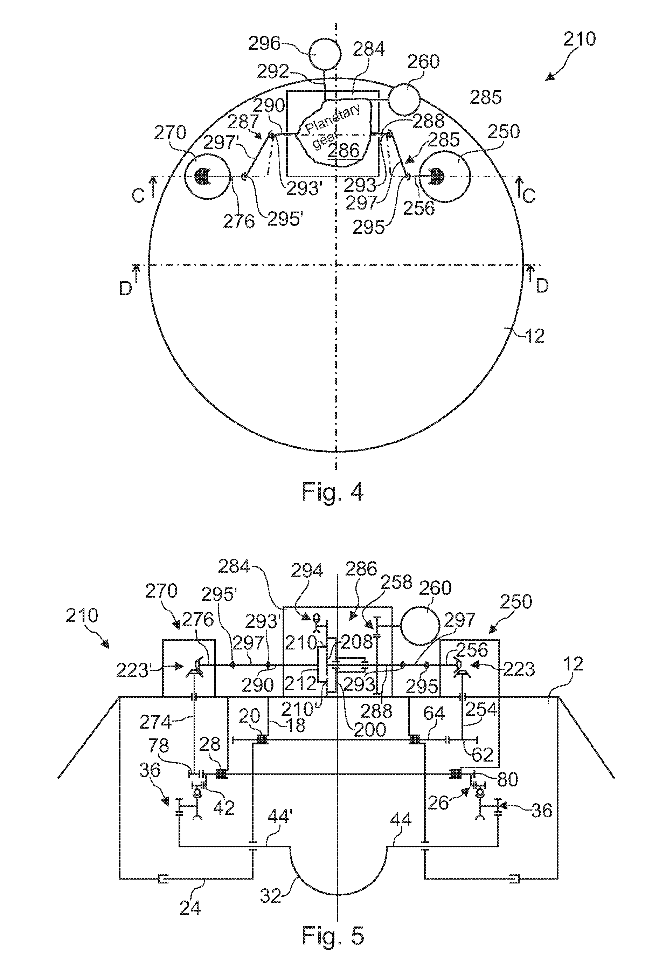

Turning now to FIGS.4-5, a second embodiment of a distribution device 210 will be described hereinafter. Features in the lower part of FIG.5, which are essentially identical to those described with respect to FIG.2, are identified by identical reference signs and will not be described again.

The charging device 210 of FIGS.4-5 comprises a third casing 284 that is spaced apart from the first casing 250 and the second casing 270. The third casing 284 is arranged on the main housing 12 approximately on the median plane between the casings 250, 270 and laterally offset away from the furnace central axis, i.e. the rotation axis of the rotors 18, 26. As opposed to the preceding embodiment, in the charging device 210 of FIGS.4-5, the first and second shafts 288, 290, which are connected to the differential 286 in the third casing 284, are thus not aligned with the connecting shafts 256, 276 of the first and second casings 250, 270.

To bridge the offset, the first and second shafts 288, 290 are coupled to the connecting shafts 256, 276 respectively, each by means of a suitable a homokinetic universal joint arrangement as illustrated in FIGS.4-5. The latter arrangements each comprise a double Cardan shaft 285, 287 with a first and a second Cardan joint 293, 295 that are interconnected by means of an intermediate shaft 297, 297' (also called Universal joints; U-joints; Hooke's joints). In each double Cardan shaft, the first Cardan joint 293; 293' is phased in relation to the second Cardan joint 295; 295' to cancel the variations in angular velocity inherent to single Cardan joints. That is to say, the second Cardan joint 295; 295' cancels the velocity transmission errors introduced by the first Cardan joint 293; 293'. As will be understood, the double Cardan shafts 285, 287 are to form a homokinetic coupling in order to ensure uniform material distribution by the chute 32 in circumferential direction. The intermediate shafts 297, 297' are each configured as a telescopic length-extensible shaft in order to provided length compensation and thereby further increase positioning flexibility and orientation tolerance for the casings 250, 270, 284. To avoid a risk of improper angular orientation between the intermediate shaft 297 and the shafts 288, 256 connected thereto, respectively between shaft 297' and the shafts 290, 276 connected thereto, each Cardan joint 293, 293'; 295, 295' is preferably configured as centered double Cardan joint, that consists of two Hooke's joints mounted back to back so that each Cardan joint 293, 293'; 295, 295' itself acts as a homokinetic constant-velocity (CV) joint. Alternatively, actual constant-velocity (CV) joints (also called homokinetic joints), such as Rzeppa-joints or Tracta joints, may be used in the place of each Cardan joint 293, 293'; 295, 295'.

The differential 286 of the second embodiment illustrated in FIG.5 is of substantially identical configuration than that of FIG.2. That is to say, it comprises an annulus 200 connected to the adjustment drive 296, which is however rotatably supported on the first shaft 288 in FIG.5, a sun gear 208 that is fixed to the first shaft 288, and a planet gear carrier 212 that is fixed to the second shaft 290. The planet gears 210, 210' are arranged on the carrier 212 to revolve about the sun gear 208 and engage the internal gearing of the annulus 200 and the external gearing of the sun gear 208. In the embodiment of FIGS.4-5 the adjustment drive 296 is connected to drive the annulus 200 by means of a reduction gear 294 of the worm-gear type, which is preferably self-blocking and arranged inside the third casing 284. The reduction gear 294 is connected to a gearwheel that engages an outer gearing of the annulus 200. Similarly, the gear train 258, which connects the main rotation drive 260 to the first shaft 288 of the differential 286, is integrated into the casing 284. The gear train 258 comprises a cylindrical gearwheel pair with a first large-diameter gearwheel fixed onto the first shaft 288 and a second small-diameter gearwheel fixed to the drive shaft of the main rotation drive 260. Accordingly, in the embodiment of FIGS.4-5, the main rotation drive 260, alike the adjustment drive 296, is mounted to the third casing 284, whereby replacement of the first casing 250 is facilitated and its unit cost is reduced. Moreover, this arrangement allows designing the first and second casings 250, 270 as identical standardized units when compared to the embodiment of FIGS.1-2.

As further seen in FIG.5, each of the first and second casings 250; 270 comprises an angular transmission in the form of a bevel gear pair 223; 223' to transmit torque from the respective substantially horizontal connecting shaft 256; 276 to the respective substantially vertical output shaft 254; 274. As will be appreciated, in the embodiment of FIGS.4-5, the first and second casings 250; 270, each comprise a base plate with a sealing bushing through which the respective output shaft 254; 274 protrudes. Accordingly, the main housing 12 also comprises, for each of these casings 250, 270, a respective opening dimensioned for the passage of the respective output gearwheel 62; 78. Accordingly, the casings 250, 270 can be rapidly removed and reinstalled onto the top plate of the main housing, without the need for manual removal or reinstallation of the output gearwheels 62; 78.

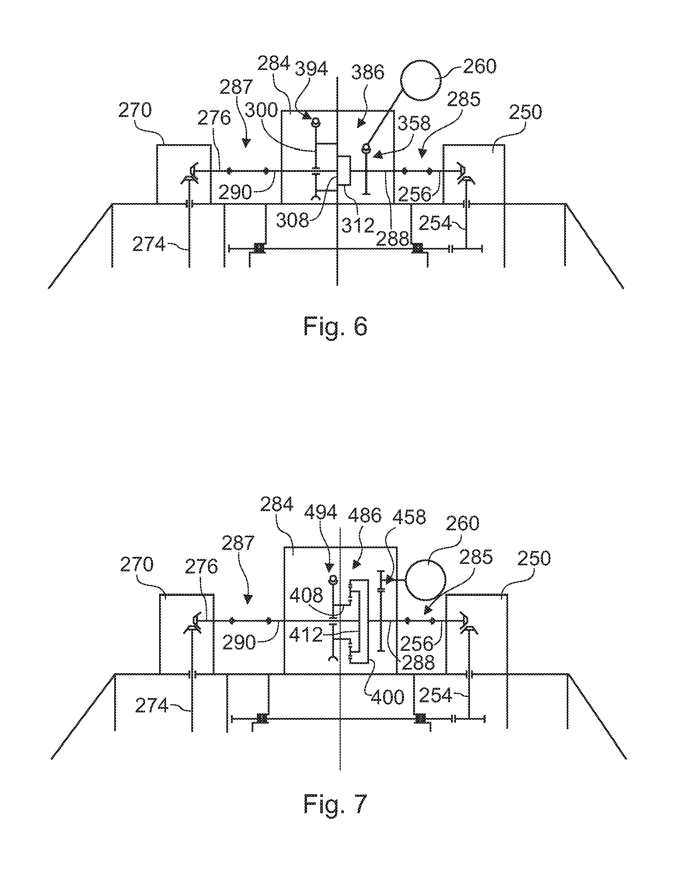

Whereas FIG.2 & FIG.5 illustrate preferred configurations of the planetary differential 86; 286 in the third casing 84; 284, alternative configurations as schematically illustrated in FIGS.6-9 are equally within the scope of the invention. These embodiments differ from that of FIG.5 only in the configuration of the respective differential and the latter's connection to the drives 260, 294. Other features of FIGS.6-9 will therefore not be repeatedly described.

FIG.6 illustrates an alternative differential 386 in which the sun gear 308 is fixed to the second shaft 290 whereas the planet gear carrier 312 is fixed to the first shaft 288 of the mechanism 386. The annulus 300 in turn is connected to the adjustment drive 296 (see FIG.4) and rotatably supported by the second shaft 290 (whereas support on the first shaft 288 is equally possible). The annulus 300 comprises an additional external worm wheel engaging a worm on the drive shaft 292 of the adjustment drive 296 to form a reduction gear 394. In the variant of FIG.6, the gear train 358 for the main rotation drive 260 is also of the worm gear type with the worm wheel fixed to the first shaft 288 and the worm connected the drive shaft of the main rotation drive 260.

In the embodiment of FIG.7, the differential drive mechanism 486 is also an epicyclic sun-and-planet gear but has yet another configuration. Here, the sun gear 408 is connected to the adjustment drive 296 and rotatably supported by the second shaft 290. The planet gear carrier 412 is fixed to the second shaft 290 and an annulus 400 devoid of external gearing is fixed to the first shaft. The sun gear 408 thus has a central passage for the second shaft 290 as seen in FIG.7. The reduction gear 494 for the adjustment drive 296 is similar to that of FIG.6, except that the worm wheel is provided on the specially designed sun gear 408. The gear train 458 for the main rotation drive 260 is identical to that used in the embodiment of FIG.5.

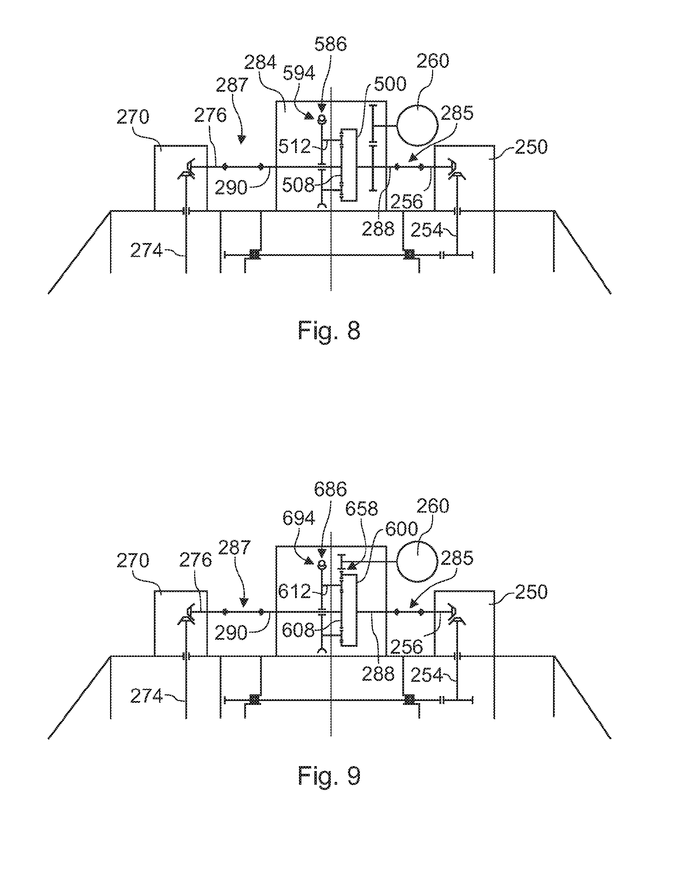

In the embodiment of FIG.8, a further variant of the epicyclic sun-and-planet gear 586 has its sun gear 508 fixed to the second shaft 290, its planet gear carrier 512 connected to the adjustment drive 296 and rotatably supported by the second shaft 290; and its said annulus 500 is fixed to the first shaft 288. The reduction gear 594 for the adjustment drive 296 is similar to that of FIGS.5-6, except that the worm wheel is provided on the planet gear carrier 512. The gear train 558 for the main rotation drive 260 is identical to that of FIG.5 and FIG.7. In the embodiment of FIG.9, the epicyclic sun-and-planet gear 686 is substantially identical to that of FIG.8. In this embodiment however, the annulus 600 is provided with an external gearing to form a gear train 658 for the main rotation drive 260 together with a gearwheel connected to the drive shaft of the drive 260.

Irrespective of the chosen configuration, the differential, which is preferably an epicyclic planetary gear, interconnects the suspension rotor to the adjustment rotor while allowing differential rotation there between. More specifically, the differential is to be configured to transmit to the adjustment rotor 26 the same speed of rotation imparted to the suspension rotor 18 by the main rotation drive 260 unless the adjustment drive 296 imparts differential rotation to the adjustment rotor 26 for adjusting, e.g. pivoting the chute.

Although not illustrated in FIGS.4-9 it will be understood, that the first casing 250 is preferably provided with an auxiliary coupling for coupling the main rotation drive 260 to its output shaft 254 in case the third casing 284 has to be removed for repair or servicing. Accordingly, the device 210 may also temporarily continue to operate with a fixed adjustment position of the chute 32 by connecting a rigid link, e.g. a shaft, in between the connecting shafts 256, 276.

Finally, it remains to be noted that a combination of the first and second casing designs according to FIGS.1-3 with a generally offset third casing, and one or two homokinetic universal joint arrangements connecting one or both connecting shafts to the differential is also within the scope of the invention. Such combination allows temporary operation without a differential, i.e. with fixed chute adjustment, while at the same time providing additional freedom and tolerance in positioning the three casings.

In the following description of third and fourth embodiment of the invention, only the main differences with respect to the first and second embodiments of FIG.1-3 and FIG.4-5 will be detailed.

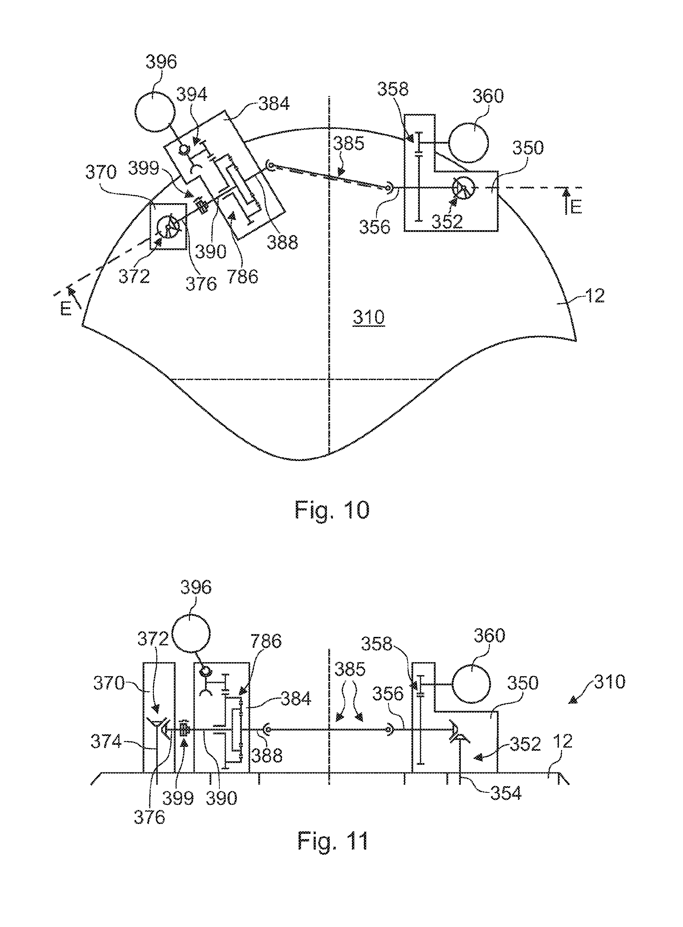

With respect to FIGS.1-3 and FIG.4-5, the embodiment of FIGS.10-11 generally corresponds to a combination employing a single homokinetic universal joint arrangement as shown in FIGS.4-5, e.g. between the first and third casings 250; 284, and a simpler flexible compensating coupling as shown in FIG.2, e.g. between the second and third casings 270, 284. FIGS.10-11 schematically illustrate a distribution device 310 according to such a third embodiment.

In the distribution device 310 of FIGS.10-11, the connecting shaft 356 of the first casing 350 is coupled to the first shaft 388 of the differential 786, which is arranged in the separate third casing 384, by means of a double Cardan shaft 385, which is configured as described above. The connecting shaft 376 of the second casing 370 however is connected to the second shaft 390 of the differential 786 by means of a simpler compensating coupling 399, e.g. a jaw coupling, an Oldham coupling, a flexible disk coupling or a gear coupling, for compensating minor radial, axial and/or angular mismatch between the shafts 376, 390. Accordingly, the connecting shaft 376 on the second casing 370 and the second shaft 390 of the differential 786 are substantially, though not necessarily exactly coaxial. Such alignment is achieved e.g. by appropriate orientation of the third casing 384 and of the bearing of the connecting shaft 376 in the second casing 370. Similar to the embodiment of FIG.2, the main rotation drive 360 in the embodiment of FIGS.10-11 is supported on the first casing 350. Accordingly, the first casing 350 encloses a gear train 358 connecting the main drive 360, through the angular transmission 352, to the output shaft 354. For temporarily continuing operation (at a fixed tilting angle of the chute 32) in case of removal of the third casing 370, e.g. for servicing the differential 786, the connecting shafts 356, 376 can be interconnected directly by means of an auxiliary double Cardan shaft (not shown) of greater length. The second casing 370 in turn encloses only the angular transmission 372 connecting the connecting shaft 376 to the output shaft 374. The differential 786 shown in FIGS.10-11 is substantially identical to that described with respect to FIG.5 (except that the annulus is carried by the second shaft 390). The embodiment of FIGS.10-11 has the advantage of providing an increase in positioning flexibility and tolerance regarding minor misplacement or improper orientation comparable to FIG.4-5 without using two double Cardan shaft arrangements.

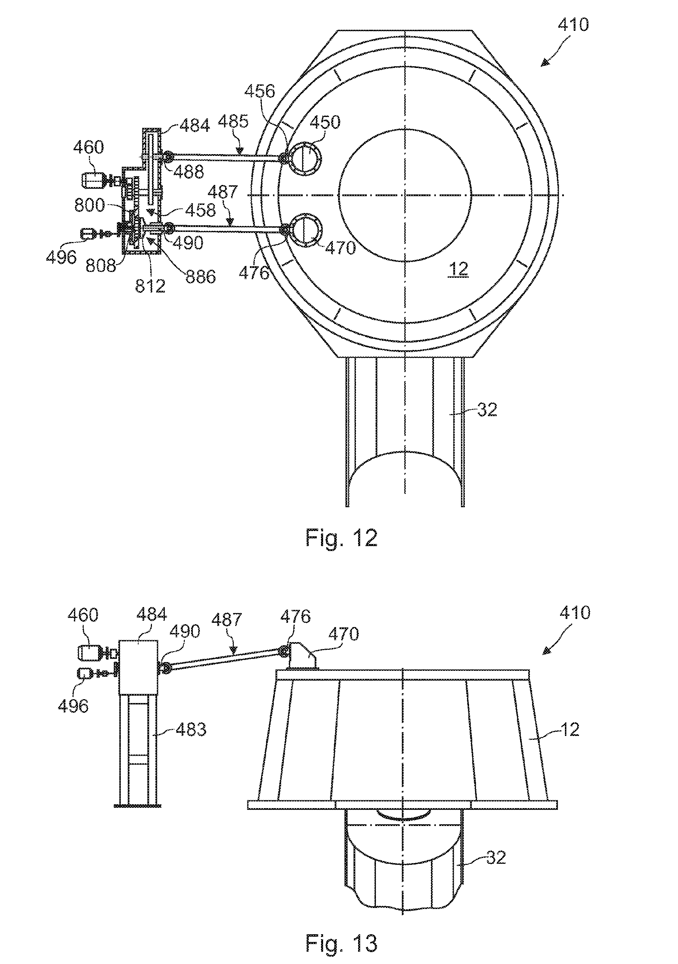

FIGS.12-13 illustrate a fourth embodiment of a charging device 410. As seen in FIGS.12-13, the third casing 484 of this embodiment is arranged laterally at a distance from the main housing 12 and supported on a separate support structure 483, i.e. the third casing 484 is supported independently of the main housing 12, e.g. by the blast furnace top cone or by the steel support structure of the blast furnace. The connecting shafts 456, 476 of the first and second casings 450, 470 are each respectively connected to the first and second shafts 488, 490 of the third casing 484 by means of a corresponding double Cardan shaft 485, 487. The first and second casings 450, 470 have a compact and modular interchangeable configuration since they enclose only the respective angular transmission (not shown). As seen in the partially sectioned plan view of FIG.12, the configuration of the differential 886 and gear components enclosed in the third casing 484 substantially corresponds to that of FIG.7. The sun gear 808 is driven by the adjustment drive 496, the annulus 800 is driven, through the gear train 458 that drives the first shaft 488, by the main rotation drive 460 whereas the planet gear carrier 812 drives the second shaft 490 either differentially for adjusting the chute 32 or synchronously for maintaining the chute 32 in position. The drives 460, 496 are both supported by the third casing 484. As will be appreciated, the embodiment of FIGS.12-13 saves constructional space immediately above the main housing 12 and further facilitates access to the separate third casing 484 for maintenance purposes. Accordingly, as will be understood, variants of the embodiments of FIGS.1-3, 4-5, or 10-11, in which the third casing is spaced apart and arranged on a separate support independently of the main housing 12 are also within the scope of the present invention.

**Legend:**

| | | | |
|---|---|---|---|
| | | 90 | second shaft |
| | | 92 | drive shaft / third shaft |
| FIG.1-3 | | 94 | reduction gear (at 84) |
| 10 | distribution device | 96 | adjustment drive |
| 12 | main housing | 100 | annulus (of 86) |
| 14 | feeding spout | 102 | external bevel gearing (of 100) |
| 16 | feeding channel | 104 | internal gearing (of 100) |
| 18 | suspension rotor | 106 | bevel gear (on 92) |
| 20 | roller bearing | 108 | sun gear (of 86) |
| 24 | protection flange | 110'; 110" | planet gears (of 86) |
| 26 | adjustment rotor | | |
| 28 | roller bearing | 112 | planet gear carrier (of 86) |
| 32 | distribution chute | 120; 122 | rotary encoders |
| 34, 34' | suspension arms | FIG.4-5 | |
| 36, 36' | pivoting mechanism | 210 | distribution device |
| 38, 38' | input shafts (of 36, 36') | 250 | first casing |
| 44, 44' | suspension trunnions | 270 | second casing |
| 40, 40' | gearwheel (of 38, 38') | 284 | third casing |
| 42 | lower gear ring | 286 | differential |
| 50 | first casing | 288 | first shaft gear (of 286) |
| 52 | angular transmission (at 50) | 290 | second shaft (of 286) |
| 54 | output shaft (at 50) | 256 | connecting shaft (of 250) |
| 56 | connecting shaft (at 50) | 276 | connecting shaft (of 270) |
| 56 | gear train (at 50) | 285, 287 | double Cardan shafts |
| 60 | main rotation drive (at 50) | | |
| 62 | gearwheel (of 54) | 293, 293' | first Cardan joint |
| 64 | first gear ring (on 18) | | |
| 66 | opening (in 12, at 50) | 295, 295' | second Cardan joint |
| 70 | second casing | | |
| 72 | angular transmission (at 70) | 297, 297' | intermediate shaft |
| 74 | output shaft (at 70) | 200 | annulus (of 286) |
| 76 | connecting shaft (at 70) | 208 | sun gear (of 286) |
| 78 | gearwheel (of 74) | 210'; 210" | planet gears (of 286) |
| 80 | second gear ring (on 26) | | |
| 82 | opening (in 12, at 70) | 212 | planet gear carrier (of 286) |
| 84 | third casing | 294 | reduction gear (for 296) |
| 86 | differential gear | 296 | adjustment drive |
| 88 | first shaft | 258 | gear train (for 260) |
| 89; 91 | coupling | 260 | main rotation drive (at 284) |
| 223; 223' | bevel gear pairs | 360 | main rotation drive |
| | | 370 | second casing |
| FIG.6 | | 372 | angular transmission (at 370) |
| 300 | annulus (of 386) | 374 | output shaft (at 370) |
| 308 | sun gear (of 386) | 384 | third casing |
| 310'; 310" | planet gears (of 386) | 388 | first shaft (of 786) |
| 312 | planet gear carrier (of 386) | 390 | second shaft (of 786) |
| 394 | reduction gear (for 296) | 356 | connecting shaft (of 350) |
| 358 | gear train (for 260) | 376 | connecting shaft (of 370) |
| FIG.7 | | 385 | double Cardan shaft |
| 400 | annulus (of 486) | 396 | adjustment drive |
| 408 | sun gear (of 486) | 399 | compensating coupling |
| 410'; 410" | planet gears (of 486) | 794 | reduction gear |
| | | 786 | differential gear |
| 412 | planet gear carrier (of 486) | FIG.12-13 | |
| 494 | reduction gear (for 296) | 410 | distribution device |
| 458 | gear train (for 260) | 450 | first casing |
| FIG.8 | | 456 | connecting shaft (of 450) |
| 500 | annulus (of 586) | 458 | gear train (for 460) |
| 508 | sun gear (of 586) | 460 | main rotation drive |
| 510'; 510" | planet gears (of 586) | 470 | second casing |
| 512 | planet gear carrier (of 586) | 476 | connecting shaft (of 470) |
| 594 | reduction gear (for 296) | 483 | support structure |
| 558 | gear train (for 260) | 484 | third casing |
| FIG.9 | | | |
| 600 | annulus (of 686) | 488 | first shaft (of 786) |
| 608 | sun gear (of 686) | 490 | second shaft (of 786) |
| 610'; 610" | planet gears (of 686) | 485; 487 | double Cardan shafts |
| 612 | planet gear carrier (of 686) | | |
| 694 | reduction gear (for 296) | 496 | adjustment drive |
| 668 | gear train (for 260) | 886 | differential gear |
| FIG.10-11 | | | |
| 310 | distribution device | 800 | annulus (of 886) |
| 350 | first casing | 808 | sun gear (of 886) |
| 352 | angular transmission (at 350) | 812 | planet gear carrier 812 (of 886) |
| 354 | output shaft (at 350) | | |
| 358 | gear train (for 360) | | |

## Claims

1. A device for distributing charge material into a shaft furnace, in particular into a blast furnace, said device comprising:
a main housing (12);
a distribution chute (32) for distributing charge material;
a suspension rotor (18) mounted in said main housing (12) so as to be rotatable about a vertical rotation axis, said suspension rotor being provided with a first gear ring (64);
an adjustment rotor (26) mounted in said main housing so as to be rotatable about a vertical rotation axis, said adjustment rotor being provided with a second gear ring (80);
said distribution chute (32) being suspended to said suspension rotor (18) so as to rotate therewith for circumferential distribution of charge material and
being adjustable in orientation relative to said suspension rotor (18) through said adjustment rotor (26) for radial distribution of charge material;
a differential gear (86) interconnecting said suspension rotor (18) and said adjustment rotor (26) so as to allow differential rotation of the adjustment rotor relative to the suspension rotor,
a main rotation drive (60), in particular an electric motor, connected to said suspension rotor (18) for imparting rotation to said suspension rotor and
connected through said differential gear (86) to said adjustment rotor (26) for imparting rotation to said adjustment rotor;
an adjustment drive (96), in particular an electric motor, connected through said differential gear (86) to said adjustment rotor (26) for imparting differential rotation to said adjustment rotor relative to the suspension rotor (18);
said differential gear (86) being configured to transmit to said adjustment rotor (26) the same speed of rotation that is imparted to said suspension rotor (18) by said main rotation drive (60) unless said adjustment drive (96) imparts, through said differential gear (86), differential rotation to said adjustment rotor (26) relative to the suspension rotor (18);
**characterized by**
a first casing (50) arranged on said main housing (12) and enclosing an angular transmission (52) between a vertical output shaft (54), which protrudes from said first casing into said main housing and is connected to a gearwheel (62) that meshes with said first gear ring (64) of said suspension rotor, and a connecting shaft (56), which protrudes from said first casing at an angle, in particular perpendicularly, with respect to said output shaft (54);
a second casing (70) arranged on said main housing (12) and enclosing an angular transmission (72) between a vertical output shaft (74), which protrudes from said second casing into said main housing and is connected to a gearwheel (78) that meshes with said second gear ring (86) of said adjustment rotor (26), and a connecting shaft (76), which protrudes from said second casing at an angle, in particular perpendicularly, with respect to said output shaft (74);
a third casing (84) that is spaced apart from said first and second casings (50, 70) and encloses said differential gear (86), said differential gear being connected to a first shaft (88), which protrudes from said third casing and is coupled to said connecting shaft (56) of said first casing (50), and to a second shaft (90), which protrudes from said third casing and is coupled to said connecting shaft (76) of said second casing (70).

2. The device for distributing charge material according to claim 1, wherein said adjustment drive (96) is mounted to said third casing (84) and preferably connected to said differential gear (86) by means of a reduction gear.

3. The device for distributing charge material according to claim 2, wherein said main rotation drive (60) is mounted
to said third casing and preferably connected to said first shaft of said differential gear by means of a gear train in said third casing; or
to said first casing (50) and preferably connected to said output shaft (54) of said first casing by means of a gear train (58) in said first casing.

4. The device for distributing charge material according to one of claims 1 to 3, wherein each of said first and second casings (50, 70) comprises a base plate with a sealing bushing through which said vertical output shaft (84, 74) protrudes and wherein said main housing comprises, for each of said first and second casings, a respective opening (66, 82) for the passage of the gearwheel on the respective output shaft.

5. The device for distributing charge material according to one of claims 1 to 4, wherein said first shaft (88) of said differential gear is coupled to said connecting shaft (56) of said first casing (50) by means of a homokinetic universal joint arrangement (89) and/or said second shaft (90) of said differential gear is coupled to said connecting shaft (76) of said second casing by means of a homokinetic universal joint arrangement (91).

6. The device for distributing charge material according to claim 5, wherein said first shaft of said differential gear is coupled to said connecting shaft of said first casing by means of a double Cardan shaft comprising two Cardan joints, preferably a double Cardan shaft with length compensation, and/or said second shaft of said differential gear is coupled to said connecting shaft of said second casing by means of a double Cardan shaft comprising two Cardan joints, preferably a double Cardan shaft with length compensation.

7. The device for distributing charge material according to claim 6, wherein
each of said two Cardan joints is a double Cardan joint, preferably a centered double Cardan joint; and/or
each double Cardan shaft comprises a length-extensible intermediate shaft that interconnects its two Cardan joints.

8. The device for distributing charge material according to one of claims 1 to 7, wherein said main rotation drive (60) is mounted on said first casing (50) and wherein said first casing and said second casing (70) are arranged on said main housing (12) so that their connecting shafts (56, 76) are aligned.

9. The device for distributing charge material according to claim 8, wherein said first shaft (88) of said differential gear is coupled to said connecting shaft (56) of said first casing by means of a compensating coupling and/or said second shaft (76) of said differential gear is coupled to said connecting shaft (76) of said second casing by means of a compensating coupling.

10. The device for distributing charge material according to any one of the preceding claims, wherein said differential gear (86) is an epicyclic sun-and-planet gear that comprises an annulus (100), a sun gear (108) and a planet gear carrier (112) carrying at least two planet gears (110, 110') that mesh with said annulus and said sun gear.

11. The device for distributing charge material according to claim 10, wherein
said sun gear is fixed to said first shaft of said differential gear,
said planet gear carrier is fixed to said second shaft of said differential gear, and
said annulus is connected to said adjustment drive;
or
said sun gear (308) is fixed to said second shaft (290) of said differential gear, said planet gear carrier (312) is fixed to said first shaft (288) of said differential gear, and
said annulus (300) is connected to said adjustment drive (296);
or
said sun gear (408) is connected to said adjustment drive (296),
said planet gear carrier (412) is fixed to said second shaft (290) of said differential gear, and
said annulus (400) is fixed to said first shaft (288) of said differential gear;
or
said sun gear (508) is fixed to said second shaft (290) of said differential gear, said planet gear carrier (512) is connected to said adjustment drive (296), and said annulus (500) is fixed to said first shaft (288) of said differential gear

12. The device for distributing charge material according to any one of the preceding claims, further comprising a pivoting device connecting said distribution chute to said adjustment rotor, said pivoting device being designed to transform a differential rotation of said adjustment rotor relative to said suspension rotor into a variation of the pivotal position of said chute about a horizontal pivoting axis for adjusting the angle of inclination of said chute.

13. The device for distributing charge material according to any one of the preceding claims, wherein each of said angular transmissions comprises a bevel gear pair that couples said vertical output shaft (54, 74) to said connecting shaft (56, 76), said connecting shaft protruding horizontally from said casing.

14. Shaft furnace charging installation comprising a device for distributing charge material according to any one of the preceding claims.

15. Blast furnace comprising a charging installation according to claim 14.

## Patentansprüche

1. Eine Vorrichtung zur Verteilung von Beschickungsmaterial in einen Schachtofen, insbesondere in einen Hochofen, wobei die Vorrichtung aufweist:
ein Hauptgehäuse (12);
eine Verteilungsschurre (32) zur Verteilung von Beschickungsmaterial;
einen Schweberotor (18), der in dem Hauptgehäuse (12) so montiert ist,
dass er um eine vertikale Drehachse drehbar ist, wobei der Schweberotor mit einem ersten Zahnkranz (64) versehen ist;
einen Einstellrotor (26), der in dem Hauptgehäuse so montiert ist, dass er um eine vertikale Drehachse drehbar ist, wobei der Einstellrotor mit einem zweiten Zahnkranz (80) versehen ist;
wobei die Verteilungsschurre (32) derart an dem Schweberotor (18) aufgehängt ist, dass sie sich mit diesem zur umfänglichen Verteilung von Beschickungsmaterial dreht und in Ausrichtung relativ zu dem Schweberotor (18) durch den Einstellrotor (26) zur radialen Verteilung von Beschickungsmaterial einstellbar ist;
ein Differentialgetriebe (86), das den Schweberotor (18) und den Einstellrotor (26) derart miteinander verbindet, dass eine Differentialdrehung des Einstellrotors relativ zu dem Schweberotor ermöglicht wird,
einen Hauptdrehantrieb (60), insbesondere einen Elektromotor, der mit dem Schweberotor (18) verbunden ist, um dem Schweberotor in Drehung zu versetzen, und der durch das Differentialgetriebe (86) mit dem Einstellrotor (26) verbunden ist, um den Einstellrotor in Drehung zu versetzen;
einen Einstellantrieb (96), insbesondere einen Elektromotor, der durch das Differentialgetriebe (86) mit dem Einstellrotor (26) verbunden ist, um den Einstellrotor in eine Differentialdrehung relativ zu dem Schweberotor (18) zu versetzen;
wobei das Differentialgetriebe (86) dafür konfiguriert ist, die gleiche Drehgeschwindigkeit auf den Einstellrotor (26) zu übertragen, die dem Schweberotor (18) durch den Hauptdrehantrieb (60) verliehen wird, es sei denn, der Einstellantrieb (96) versetzt den Einstellrotor (26) durch das Differentialgetriebe (86) in eine Differentialdrehung relativ zu dem Schweberotor (18);
**gekennzeichnet durch**
eine erste Ummantelung (50), die an dem Hauptgehäuse (12) angeordnet ist und ein Winkelgetriebe (52) zwischen einer vertikalen Abtriebswelle (54), die von der ersten Ummantelung in das Hauptgehäuse vorsteht und mit einem Zahnrad (62), das mit dem ersten Zahnkranz (64) des Schweberotors kämmt, verbunden ist, und eine Transmissionswelle (56), die von der ersten Ummantelung in einem insbesondere senkrechten Winkel in Bezug auf die Abtriebswelle (54) vorsteht, einschließt;
eine zweite Ummantelung (70), die an dem Hauptgehäuse (12) angeordnet ist und ein Winkelgetriebe (72) zwischen einer vertikalen Abtriebswelle (74), die von der zweiten Ummantelung in das Hauptgehäuse vorsteht und mit einem Zahnrad (78) verbunden ist, das mit dem zweiten Zahnkranz (86) des Einstellrotors (26) kämmt, und eine Transmissionswelle (76), die von der zweiten Ummantelung in einem insbesondere senkrechten Winkel in Bezug auf die Abtriebswelle (74) vorsteht, einschließt;
eine dritte Ummantelung (84), die von der ersten und der zweiten Ummantelung (50, 70) beabstandet ist und das Differentialgetriebe (86) einschließt, wobei das Differentialgetriebe mit einer ersten Welle (88), die von der dritten Ummantelung vorsteht und mit der Transmissionswelle (56) der ersten Ummantelung (50) gekoppelt ist, und mit einer zweiten Welle (90), die von der dritten Ummantelung vorsteht und mit der Transmissionswelle (76) der zweiten Ummantelung (70) gekoppelt ist, verbunden ist.

2. Vorrichtung zur Verteilung von Beschickungsmaterial nach Anspruch 1, wobei der Einstellantrieb (96) an der dritten Ummantelung (84) montiert und vorzugsweise durch ein Untersetzungsgetriebe mit dem Differentialgetriebe (86) verbunden ist.

3. Vorrichtung zur Verteilung von Beschickungsmaterial nach Anspruch 2, wobei der Hauptdrehantrieb (60)
an der dritten Ummantelung montiert und vorzugsweise durch einen Getriebezug in der dritten Ummantelung mit der ersten Welle des Differentialgetriebe verbunden ist; oder
an der ersten Ummantelung (50) montiert und vorzugsweise durch einen Getriebezug (58) in der ersten Ummantelung mit der Abtriebswelle (54) der ersten Ummantelung verbunden ist.

4. Vorrichtung zur Verteilung von Beschickungsmaterial nach einem der Ansprüche 1 bis 3, wobei jede der ersten und der zweiten Ummantelung (50, 70) eine Grundplatte mit einer Abdichthülse aufweist, durch welche die vertikale Abtriebswelle (84, 74) vorsteht, und wobei das Hauptgehäuse für jede der ersten und der zweiten Ummantelung eine jeweilige Öffnung (66, 82) für den Durchgang des Zahnrads auf der jeweiligen Abtriebswelle aufweist.

5. Vorrichtung zur Verteilung von Beschickungsmaterial nach einem der Ansprüche 1 bis 4, wobei die erste Welle (88) des Differentialgetriebes durch eine homokinetische Antriebsgelenkanordnung (89) an die Transmissionswelle (56) der ersten Ummantelung (50) gekoppelt ist und/oder die zweite Welle (90) des Differentialgetriebes durch eine homokinetische Antriebsgelenkanordnung (91) an die Transmissionswelle (76) der zweiten Ummantelung gekoppelt ist.

6. Vorrichtung zur Verteilung von Beschickungsmaterial nach Anspruch 5, wobei die erste Welle des Differentialgetriebes durch eine zwei Kardangelenke aufweisende Doppelkardanwelle an die Transmissionswelle der ersten Ummantelung gekoppelt ist, vorzugsweise eine Doppelkardanwelle mit einer Längenkompensation, und/oder die zweite Welle des Differentialgetriebes durch eine zwei Kardangelenke aufweisende Doppelkardanwelle an die Transmissionswelle der zweiten Ummantelung gekoppelt ist, vorzugsweise eine Doppelkardanwelle mit Längenkompensation.

7. Vorrichtung zur Verteilung von Beschickungsmaterial nach Anspruch 6, wobei jedes der zwei Kardangelenke ein Doppelkardangelenk ist, vorzugsweise ein zentriertes Doppelkardangelenk; und/oder jede Doppelkardanwelle eine verlängerbare Zwischenwelle aufweist, die ihre zwei Kardangelenke verbindet.

8. Vorrichtung zur Verteilung von Beschickungsmaterial nach einem der Ansprüche 1 bis 7, wobei der Hauptdrehantrieb (60) an der ersten Ummantelung (50) montiert ist und wobei die erste Ummantelung und die zweite Ummantelung (70) derart an dem Hauptgehäuse (12) montiert sind, dass ihre Transmissionswellen (56, 76) fluchten.

9. Vorrichtung zur Verteilung von Beschickungsmaterial nach Anspruch 8, wobei die erste Welle (88) des Differentialgetriebes durch eine Ausgleichkupplung an die Transmissionswelle (56) der ersten Ummantelung gekoppelt ist und/oder die zweite Welle (76) des Differentialgetriebes durch eine Ausgleichkupplung an die Transmissionswelle (76) der zweiten Ummantelung gekoppelt ist.

10. Vorrichtung zur Verteilung von Beschickungsmaterial nach einem der vorhergehenden Ansprüche, wobei das Differentialgetriebe (86) ein Planetengetriebe ist, das einen Ring (100), ein Sonnenrad (108) und einen Planetenradträger (112) aufweist, der mindestens zwei Planetenräder (110, 110') trägt, die mit dem Ring und mit dem Sonnenrad kämmen.

11. Vorrichtung zur Verteilung von Beschickungsmaterial nach Anspruch 10,
wobei
das Sonnenrad an der ersten Welle des Differentialgetriebes befestigt ist, der Planetenradträger an der zweiten Welle des Differentialgetriebes befestigt ist, und
der Ring mit dem Einstellantrieb verbunden ist;
oder
das Sonnenrad (308) an der zweiten Welle (290) des Differentialgetriebes befestigt ist, der Planetenradträger (312) an der ersten Welle (288) des Differentialgetriebes befestigt ist, und
der Ring (300) mit dem Einstellantrieb (296) verbunden ist;
oder
das Sonnenrad (408) mit dem Einstellantrieb (296) verbunden ist,
der Planetenradträger (412) an der zweiten Welle (290) des Differentialgetriebes befestigt ist, und
der Ring (400) an der ersten Welle (288) des Differentialgetriebes befestigt ist;
oder
das Sonnenrad (508) an der zweiten Welle (290) des Differentialgetriebes befestigt ist, der Planetenradträger (512) mit dem Einstellantrieb (296) verbunden ist und der Ring (500) an der ersten Welle (288) des Differentialgetriebes befestigt ist.

12. Vorrichtung zur Verteilung von Beschickungsmaterial nach einem der vorhergehenden Ansprüche, ferner aufweisend eine Schwenkvorrichtung, die die Verteilungsschurre mit dem Einstellrotor verbindet, wobei die Schwenkvorrichtung dafür ausgelegt ist, eine Differentialdrehung des Einstellrotors relativ zu dem Schweberotor in eine Änderung der Schwenkposition der Schurre um eine horizontale Schwenkachse zum Einstellen des Neigungswinkels der Schurre zu übertragen.

13. Vorrichtung zur Verteilung von Beschickungsmaterial nach einem der vorhergehenden Ansprüche, wobei jedes der Winkelgetriebe ein Kegelradgetriebe aufweist, das die vertikale Abtriebswelle (54, 74) an die Transmissionswelle (56, 76) koppelt, wobei die Transmissionswelle horizontal von der Ummantelung vorsteht.

14. Beschickungseinrichtung für einen Schachtofen, aufweisend eine Vorrichtung zur Verteilung von Beschickungsmaterial nach einem der vorhergehenden Ansprüche.

15. Hochofen, aufweisend eine Beschickungseinrichtung nach Anspruch 14.

## Revendications

1. Dispositif de distribution d'un matériau de charge dans un four à cuve, notamment dans un haut fourneau, ledit dispositif comprenant :
une carcasse principale (12) ;
une goulotte de distribution (32) pour distribuer un matériau de charge ;
un rotor de suspension (18) monté dans ladite carcasse principale (12) de manière à pouvoir effectuer une rotation autour d'un axe de rotation vertical, ledit rotor de suspension étant pourvu d'une première couronne dentée (64) ;
un rotor de réglage (26) monté dans ladite carcasse principale de manière à pouvoir effectuer une rotation autour d'un axe de rotation vertical, ledit rotor de réglage étant pourvu d'une seconde couronne dentée (80) ;
ladite goulotte de distribution (32) étant suspendue audit rotor de suspension (18) de manière à tourner avec celui-ci pour une distribution circonférentielle de matériau de charge et son orientation par rapport audit rotor de suspension (18) pouvant être réglée par le biais dudit rotor de réglage (26) pour une distribution radiale de matériau de charge ;
un engrenage différentiel (86) interconnectant ledit rotor de suspension (18) et ledit rotor de réglage (26) de manière à permettre une rotation différentielle du rotor de réglage par rapport au rotor de suspension ;
un entraînement en rotation principal (60), notamment un moteur électrique, connecté audit rotor de suspension (18) pour communiquer une rotation audit rotor de suspension et connecté audit rotor de réglage (26) par le biais dudit engrenage différentiel (86) pour communiquer une rotation audit rotor de réglage ;
un entraînement de réglage (96), notamment un moteur électrique, connecté audit rotor de réglage (26) par le biais dudit engrenage différentiel (86) pour communiquer audit rotor de réglage une rotation différentielle par rapport au rotor de suspension (18) ;
ledit engrenage différentiel (86) étant configuré pour transmettre audit rotor de réglage (26) la même vitesse de rotation que celle qui est communiquée audit rotor de suspension (18) par ledit entraînement en rotation principal (60) à moins que ledit entraînement de réglage (96) communique audit rotor de réglage (26) par le biais dudit engrenage différentiel (86) une rotation différentielle par rapport au rotor de suspension (18) ;
**caractérisé par**
un premier carter (50) disposé sur ladite carcasse principale (12) et enfermant une transmission angulaire (52) entre un arbre de sortie (54) vertical qui fait saillie dudit premier carter dans ladite carcasse principale et est connecté à une roue d'engrenage (62) qui s'engrène avec ladite première couronne dentée (64) dudit rotor de suspension et un arbre de connexion (56) qui fait saillie depuis ledit premier carter suivant un angle, notamment de manière perpendiculaire, par rapport audit arbre de sortie (54) ;
un deuxième carter (70) disposé sur ladite carcasse principale (12) et enfermant une transmission angulaire (72) entre un arbre de sortie (74) vertical qui fait saillie dudit deuxième carter dans ladite carcasse principale et est connecté à une roue d'engrenage (78) qui s'engrène avec ladite seconde couronne dentée (86) dudit rotor de réglage (26) et un arbre de connexion (76) qui fait saillie depuis ledit deuxième carter suivant un angle, notamment de manière perpendiculaire, par rapport audit arbre de sortie (74) ;
un troisième carter (84) qui est situé à distance desdits premier et deuxième carters (50, 70) et renferme ledit engrenage différentiel (86), ledit engrenage différentiel étant connecté à un premier arbre (88) qui fait saillie depuis ledit troisième carter et est couplé audit arbre de connexion (56) dudit premier carter (50) et à un second arbre (90) qui fait saillie depuis ledit troisième carter et est couplé audit arbre de connexion (76) dudit deuxième carter (70).

2. Dispositif de distribution d'un matériau de charge selon la revendication 1, dans lequel ledit entraînement de réglage (96) est monté sur ledit troisième carter (84) et connecté de préférence audit engrenage différentiel (86) au moyen d'un engrenage réducteur.

3. Dispositif de distribution d'un matériau de charge selon la revendication 2, dans lequel ledit entraînement en rotation principal (60) est monté sur ledit troisième carter et de préférence connecté audit premier arbre dudit engrenage différentiel au moyen d'un train d'engrenages dans ledit troisième carter ; ou
sur ledit premier carter (50) et de préférence connecté audit arbre de sortie (54) dudit premier carter au moyen d'un train d'engrenages (58) dans ledit premier carter.

4. Dispositif de distribution d'un matériau de charge selon une des revendications 1 à 3, dans lequel chacun desdits premier et deuxième carters (50, 70) comprend une plaque de base pourvue d'une garniture d'étanchéité à travers laquelle ledit arbre de sortie (84, 74) vertical fait saillie et dans lequel ladite carcasse principale comprend, pour chacun desdits premier et deuxième carters, une ouverture respective (66, 82) pour le passage de la roue d'engrenage sur l'arbre de sortie respectif.

5. Dispositif de distribution d'un matériau de charge selon une des revendications 1 à 4, dans lequel ledit premier arbre (88) dudit engrenage différentiel est couplé audit arbre de connexion (56) dudit premier carter (50) au moyen d'un arrangement de joint universel homocinétique (89) et/ou ledit second arbre (90) dudit engrenage différentiel est couplé audit arbre de connexion (76) dudit deuxième carter au moyen d'un arrangement de joint universel homocinétique (91).

6. Dispositif de distribution d'un matériau de charge selon la revendication 5, dans lequel ledit premier arbre dudit engrenage différentiel est couplé audit arbre de connexion dudit premier carter au moyen d'un arbre à double cardan comprenant deux joints de cardan, de préférence un arbre à double cardan à compensation de longueur, et/ou ledit second arbre dudit engrenage différentiel est couplé audit arbre de connexion dudit deuxième carter au moyen d'un arbre à double cardan comprenant deux joints de cardan, de préférence un arbre à double cardan à compensation de longueur.

7. Dispositif de distribution d'un matériau de charge selon la revendication 6, dans lequel
chacun desdits deux joints de cardan est un joint de cardan double, de préférence un joint de cardan double centré ; et/ou
chaque arbre à double cardan comprend un arbre intermédiaire extensible en longueur qui interconnecte ses deux joints de cardan.

8. Dispositif de distribution d'un matériau de charge selon une des revendications 1 à 7, dans lequel ledit entraînement en rotation principal (60) est monté sur ledit premier carter (50) et dans lequel ledit premier carter et ledit deuxième carter (70) sont disposés sur ladite carcasse principale (12) de manière à ce que leurs arbres de connexion (56, 76) soient alignés.

9. Dispositif de distribution d'un matériau de charge selon la revendication 8, dans lequel ledit premier arbre (88) dudit engrenage différentiel est couplé audit arbre de connexion (56) dudit premier carter au moyen d'un accouplement compensateur et/ou ledit second arbre (76) dudit engrenage différentiel est couplé audit arbre de connexion (76) dudit deuxième carter au moyen d'un accouplement compensateur.

10. Dispositif de distribution d'un matériau de charge selon une des revendications précédentes, dans lequel ledit engrenage différentiel (86) est un engrenage planétaire épicyclique qui comprend une roue annulaire (100), une roue solaire (108) et un porte-planétaires (112) portant au moins deux roues planétaires (110, 110') qui s'engrènent avec ladite roue annulaire et ladite roue solaire.

11. Dispositif de distribution d'un matériau de charge selon la revendication 10, dans lequel
ladite roue solaire est fixée sur ledit premier arbre dudit engrenage différentiel,
ledit porte-planétaires est fixé sur ledit second arbre dudit engrenage différentiel et
ladite roue annulaire est connectée audit entraînement de réglage ;
ou
ladite roue solaire (308) est fixée sur ledit second arbre (290) dudit engrenage différentiel,
ledit porte-planétaires (312) est fixé sur ledit premier arbre (288) dudit engrenage différentiel et
ladite roue annulaire (300) est connectée audit entraînement de réglage (296) ;
ou
ladite roue solaire (408) est connectée audit entraînement de réglage (296),
ledit porte-planétaires (412) est fixé sur ledit second arbre (290) dudit engrenage différentiel et
ladite roue annulaire (400) est fixée sur ledit premier arbre (288) dudit engrenage différentiel ;
ou
ladite roue solaire (508) est fixée sur ledit second arbre (290) dudit engrenage différentiel,
ledit porte-planétaires (512) est connecté audit entraînement de réglage (296) et
ladite roue annulaire (500) est fixée sur ledit premier arbre (288) dudit engrenage différentiel.

12. Dispositif de distribution d'un matériau de charge selon une des revendications précédentes, comprenant, en outre, un dispositif de basculement connectant ladite goulotte de distribution audit rotor de réglage, ledit dispositif de basculement étant conçu pour transformer une rotation différentielle dudit rotor de réglage par rapport audit rotor de suspension en une variation de la position de basculement de ladite goulotte autour d'un axe de basculement horizontal pour régler l'angle d'inclinaison de ladite goulotte.

13. Dispositif de distribution d'un matériau de charge selon une des revendications précédentes, dans lequel chacune desdites transmissions angulaires comprend une paire de roues coniques qui accouple ledit arbre de sortie (54, 74) vertical audit arbre de connexion (56, 76), ledit arbre de connexion faisant saillie horizontalement depuis ledit carter.

14. Installation de chargement de four à cuve comprenant un dispositif de distribution d'un matériau de charge selon une des revendications précédentes.

15. Haut fourneau comprenant une installation de chargement selon la revendication 14.
